(19) **Europäisches Patentamt**

**European Patent Office**

**Office européen des brevets**

(11) **EP 1 395 982 B1**

(12) **EUROPEAN PATENT SPECIFICATION**

(45) Date of publication and mention
of the grant of the patent:
**19.04.2006 Bulletin 2006/16**

(51) Int Cl.:
**G10L 19/14** $^{(2006.01)}$

(21) Application number: **02708594.3**

(22) Date of filing: **27.03.2002**

(86) International application number:
**PCT/IB2002/001009**

(87) International publication number:
**WO 2002/082426 (17.10.2002 Gazette 2002/42)**

(54) **ADPCM SPEECH CODING SYSTEM WITH PHASE-SMEARING AND PHASE-DESMEARING FILTERS**

ADPCM SPRACHKODIERSYSTEM MIT PHASENFALTUNGS UND -ENTFALTUNGSFILTERN

SYSTEME DE CODAGE DE LA PAROLE ADPCM DOTE DE FILTRES DE TRAINAGE DE PHASE ET DE DETRAINAGE DE PHASE

(84) Designated Contracting States:
**AT BE CH CY DE DK ES FI FR GB GR IE IT LI LU MC NL PT SE TR**

(30) Priority: **09.04.2001 EP 01201301**

(43) Date of publication of application:
**10.03.2004 Bulletin 2004/11**

(73) Proprietor: **Koninklijke Philips Electronics N.V.**
**5621 BA Eindhoven (NL)**

(72) Inventor: **GIGI, Ercan, F.**
**NL-5656 AA Eindhoven (NL)**

(74) Representative: **Schoenmaker, Maarten**
**Philips**
**Intellectual Property & Standards**
**P.O. Box 220**
**5600 AE Eindhoven (NL)**

(56) References cited:
- **RICHARD A. WAINWRIGHT: "ON THE POTENTIAL ADVANTAGE OF A SMEARING-DESMEARING FILTER TECHNIQUE IN OVERCOMING IMPULSE-NOISE PROBLEMS IN DATA SYSTEMS" IRE TRANSACTIONS ON COMMUNICATION SYSTEMS, vol. CS, no. 9, December 1961 (1961-12), pages 362-366, XP001079895**
- **KALET I ET AL: "The capacity of PCM voiceband channels" PROCEEDINGS OF THE INTERNATIONAL CONFERENCE ON COMMUNICATIONS (ICC). GENEVA, MAY 23 - 26, 1993, NEW YORK, IEEE, US, vol. 3, 23 May 1993 (1993-05-23), pages 507-511, XP010136953 ISBN: 0-7803-0950-2**
- **CUPERMAN V ET AL: "Spectral excitation coding of speech at 2.4 kb/s" ACOUSTICS, SPEECH, AND SIGNAL PROCESSING, 1995. ICASSP-95., 1995 INTERNATIONAL CONFERENCE ON DETROIT, MI, USA 9-12 MAY 1995, NEW YORK, NY, USA, IEEE, US, 9 May 1995 (1995-05-09), pages 496-499, XP010151263 ISBN: 0-7803-2431-5**

**Description**

The present invention relates to a speech coding system with a speech encoder and a speech decoder cooperating with said speech encoder, the speech encoder comprising a pre-processor and an ADPCM (adaptive differential pulse code modulation) encoder with a quantizer and step-size adaptation means and the speech decoder comprising an ADPCM decoder with similar step-size adaptation means as in the ADPCM encoder and a post-processor.

It has been observed that close-microphone voice recordings reduce or eliminate the effect of the room acoustics on a voice signal by minimizing the distance of the voice source (the mouth) to the microphone, like in a handset of a telephone. When these voice signals are processed in the encoder of a standard $P^2CM$ audio coding system, i.e. a pre-processed ADPCM encoder, problems occur with respect to reproducing the pulse like character of the close-microphone voice recording compared to the recording from a larger distance. An ADPCM coder is provided with a quantizer in which the input signal thereof, i.e. the difference between a sampled audio input signal and a predicted quantized value thereof, is quantized with a step-size which is adapted to the quantizer input signal. At pulse-like regions in close-microphone voice recording, the input signal for the quantizer in the ADPCM coder may be too high and too fast for the quantizer to adapt its step-size. The reverberations in the room smear the energy of the voice signal over time, allowing a slower adaptation of the step-size.

Therefore, to improve the performance of the $P^2CM$ audio coding system for pulse-like signals, the ADPCM encoder input signal has to be processed in such a way that the input for the quantizer is free of rapid energy increases over short time frames. The output of the speech decoder should, however, sound like the original, without any artifacts. So the option of simulating the room effect to produce a distant version of the original recording and applying the coding on this signal, is not good enough.

The purpose of the invention is to mitigate the above problem and to provide for a speech coding system with an improved recording and reproduction, particularly for pulse-like voice signals.

According to the invention, the speech coding system, as described in the opening paragraph, is characterized in that the pre-processor is provided with phase-smearing filtering means to smooth the effect of high and/or rapid energy changes at the input of the quantizer and the post-processor is provided with filtering means inverse to said phase-smearing filtering means.

Although phase-smearing filtering can be done in time-domain, it is preferred to perform this filtering, in case the pre-processor and the post-processor are provided with spectral amplitude warping means and means to undo the effect of such a warping respectively, in the frequency domain because said warping means and unwarping means are operable in the frequency domain. Therefore, particularly, phase-smearing and warping are performed in the same processing block as well as the inverse phase- smearing and unwarping. Because phase-smearing is a linear process, while spectral amplitude warping is a non linear process, both processes are not integrated with each other but are performed one after another in the frequency domain; the filtered signals are subjected to warping. Spectral amplitude warping is known per se; see: R. Lefebre, C. Laflamme; "Spectral Amplitude Warping (SAW) for Noise Spectrum Shaping in Audio Coding", ICASSP, Vol. 1, p. 335-338, 1997.

These and other aspects of the invention will be apparent from and elucidated with reference to the drawing and the embodiment described hereinafter. In the drawing:

Fig. 1 shows a block diagram of a $P^2CM$ coding system with means for pre-and post-processing, including phase-smearing filtering means and inverse phase-smearing filtering means respectively, operable in time domain;

Fig. 2A, 2B are block diagrams of an ADPCM encoder and an ADPCM decoder respectively;

Figs. 3A-3D show various characteristics of a first embodiment of a phase smearing filter;

Figs. 4A-4D show various characteristics of a second embodiment of a phase smearing filter;

Fig. 5 is a block diagram of a pre-/post-processor for a $P^2CM$ audio encoder and decoder, in which the phase smearing is operable in frequency domain; and

Fig. 6 shows the framing and windowing in the pre-processor.

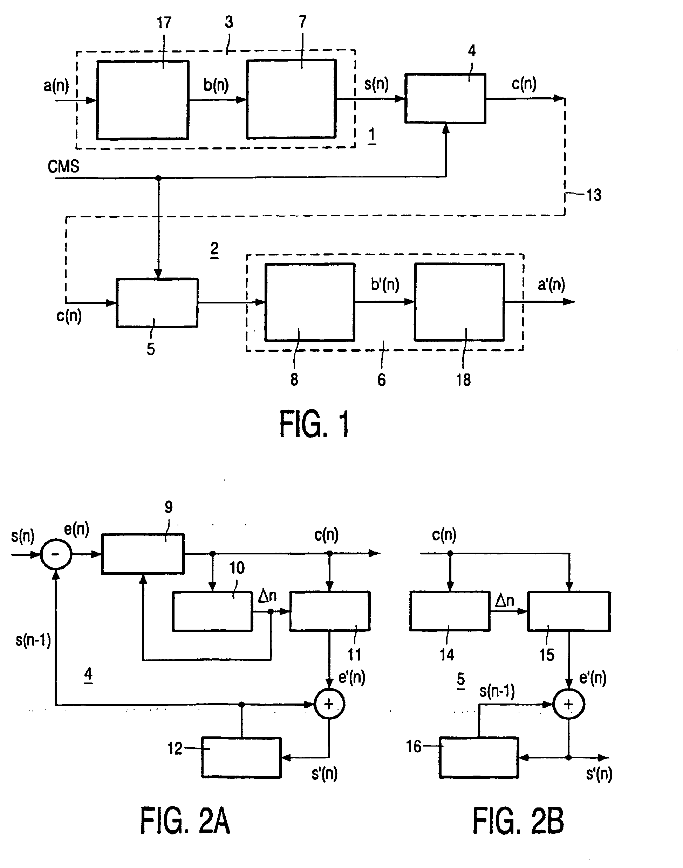

The $P^2CM$ audio coding system in fig. 1 is constituted by an encoder 1 and a decoder 2. The encoder 1 comprises a pre-processor 3 and an ADPCM encoder 4, while the decoder 2 is provided with an ADPCM decoder 5 and a post-processor 6. The ADPCM encoder 4 is illustrated in fig. 2A and the ADPCM decoder 5 in fig. 2B.

As an example, in the $P^2CM$ audio encoder 1 a PCM input signal is segmented into frames of e.g. 10 milliseconds. With e.g. a sampling frequency of 8 kHz a frame consists of 80 samples. Each sample is represented by e.g. 16 bits. This input signal is supplied to the pre-processor 3, while the output signal obtained in response thereto is supplied to the ADPCM encoder 4. A further input signal for the ADPCM encoder 4 is formed by a codec mode signal CMS, which determines the bit allocation for the code words in the bitstream output of the ADPCM encoder 4. The ADPCM encoder 4 produces a code word for each sample in the pre-processed signal frame. The code words are then packed into frames of, in the present example 80 codes. Depending on the chosen codec mode, the resulting bitstream has a bit-rate of e.g. 11.2, 12.8, 16, 19.2, 21.6, 24 or 32 kbits/s.

In the P²CM audio decoder 2 the input of the ADPCM decoder 5 is formed by a bitstream of code frames and the codec mode. In the present example the code frames consist of 80 codes, which are decoded by the ADPCM decoder 5 to form a PCM output frame of 80 samples, which are subjected to post-processing in the post-processor 6.

In the pre-processor 3 the signal characteristics are changed such that the resulting signal is better suited for coding. The pre-processing modifies the signal spectrum prior to encoding. Therefore, a non-linear transformation, e.g. a sqare root transformation, may be applied to the spectral amplitudes. By such a transformation, called "spectral amplitude warping", relatively small spectral amplitudes are increased with respect to relatively strong spectral amplitudes in order to keep an important part of them above the quantizer noise introduced in the ADPCM encoder 4. In order to modify the signal spectrum in such a way, the pre-processor 3 comprises a processing device 7 with a time-to-frequency transformation unit to transform frames of time domain samples of audio signals to the frequency domain, spectral amplitude warping means, and a frequency-to-time transformation unit to transform the warped audio signals from the frequency-domain to the time domain. This transformation is reversible at the P²CM audio decoder side without need for additional bits to be sent. Therefore, the post-processor 6 comprises processing means 8 with a time-to-frequency transformation unit to transform frames of time domain samples of audio signals to the frequency domain, means to undo the effect of spectral amplitude warping done in the pre-processor at the encoder side and a frequency-to-time transformation unit to transform the unwarped audio signals from the frequency-domain to the time domain.

The ADPCM encoder 4 as illustrated in fig. 2A comprises a quantizer block 9, a step-size adaptation block 10, a decoder block 11, and a predictor block 12. The input for the ADPCM encoder 4 is a sampled audio signal provided by the pre-processor 3. When a sample n has a value s(n), for every input value s(n) the difference between this value and the estimated (predicted) value s(n-1) is taken as an error signal e(n) which is then quantized and encoded by the quantizer block 9, giving the output code c(n). The output code c(n) forms a bitstream which is sent or transmitted and received by the ADPCM decoder 5 of the P²CM audio coder. In fig. 1 this is indicated by the broken line 13. The output code c(n) is also used for the adaptation of the quantizer step-size $\Delta$n by block 10 and by the decoder block 11 to get a quantized error signal e'(n). The quantized error signal e'(n) is added to the predicted value s(n-1) resulting in the quantized input value s'(n). s'(n) is used by the predictor block 12 to adapt its prediction coefficients.

The ADPCM decoder 5 is just a sub-set of the encoder 4; it reads the received quantized code c(n) from the bitstream and uses the same as the encoder 4 to update its internal variables. The ADPCM decoder 5, therefore, comprises a step-size adaptation block 14, a decoder block 15 and a predictor block 16. The output of the decoder block 15 is the quantized error signal e'(n), which, after being added to the predicted value s(n-1), gives the quantized audio signal s'(n).

Although not further indicated in figs. 2A and 2B the codec mode signal CMS forms an input signal too for the decoder block 11 in the ADPCM encoder 4 and for the decoder block 15 in the ADPCM decoder 5.

In stead of the above ADPCM encoder and decoder other encoders and decoders will be applicable too.

As already mentioned in the introductory part of the description problems occur with respect to reproducing the pulse like character of the close-microphone recording compared to the recording from a larger distance. At pulse-like regions in close-microphone recording, the input signal for the quantizer block 9 becomes too high and too fast for the quantizer to adapt its step-size $\Delta$n.

According to the invention, the solution to this problem is to use a phase-smearing filter in the P²CM audio encoder 1. This filter has an all-pass characteristic which means that the signal energy for all frequencies remain unchanged. It is also easy to revert back to the original unfiltered form by using the time-inversed version of the same filter in the P²CM audio decoder 2. Fig. 1 shows the phase-smearing filter 17. The input thereof is formed by the PCM input signals of the P²CM audio encoder 1, while the filtered output signals are supplied to the processing block 7. In the phase-smearing filter 17 a Finite Impulse Response (FIR) filtering operation is performed with p(m) as the filter impulse response, L the filter length, s(n) the input signal and $s_p(n)$ the filtered output signal according to the relation:

$$s_p(n) = \sum_{m=0}^{L-1} s(n-m).p(m) \qquad (A)$$

The inverse phase-smearing is done by means of the inverse phase-smearing filter 18 at the output of the processing block 8 in the P²CM audio decoder 2 with the same filter, but with reversed time order according to the relation:

$$s'(n) = \sum_{m=0}^{L-1} s_p'(n-m) \cdot p(L-1-m) \tag{B}$$

with $s_p'(n)$ the input signal and $s'(n)$ the filtered output signal. This operation will result in a total delay of length L at the output. A large processing delay is undesirable if the coder is used for communication, e.g. telephone services. Therefore, the filter length L must be kept as small as possible.

Because filtering in time-domain requires a relatively large filter length, it is preferred to perform the filtering in frequency domain. In the following an example of a phase-smearing filter, where the filter is constructed in the frequency domain, using a constant amplitude and a varying phase for each frequency component, is given. The frequency response of this filter is in accordance with the relation:

$$P(k) = \exp[-j\pi \cdot k(k-\tfrac{1}{2}N)N^{-1}] \text{ with } 0 \leq k \leq \tfrac{1}{2}N. \tag{C}$$

For real-valued data, the negative frequency axis must be the symmetric:

$$R\{P(k)\} = R\{P(N-k)\} \text{ and } I\{P(k)\} = -I\{P(N-k)\} \text{ with } \tfrac{1}{2}N < k < N, \tag{D}$$

where R and I are respectively the real and imaginary parts of the spectrum.
Transformation into time domain is according to the relation:

$$P(n+\tfrac{1}{2}L) = 1/N \cdot \sum_{k=0}^{N-1} P(k) \cdot \exp[2\pi jkn/N] \text{ with } -\tfrac{1}{2}L \leq n < \tfrac{1}{2}L. \tag{E}$$

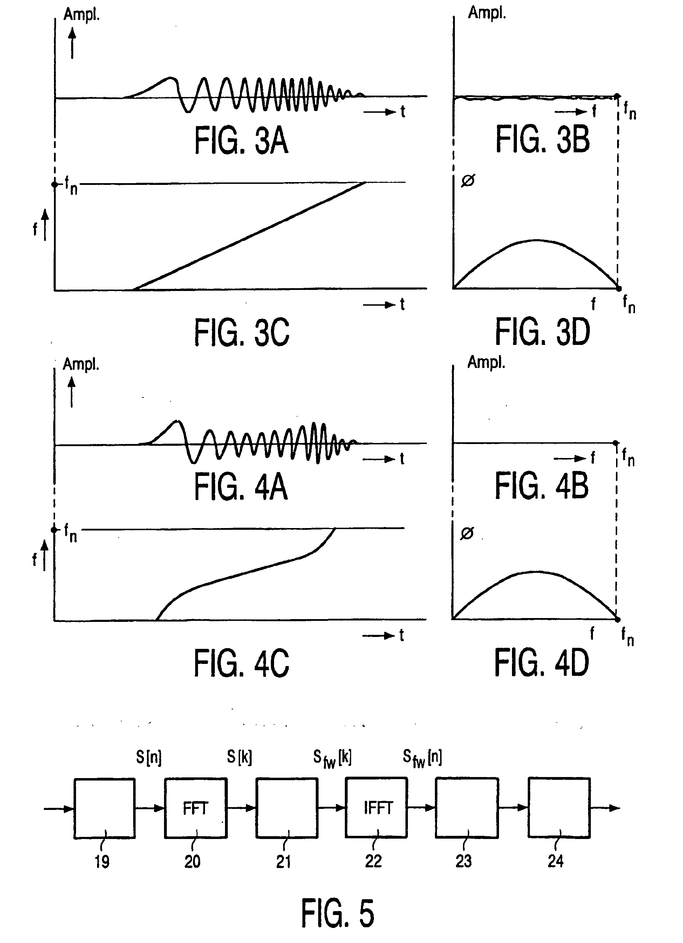

The DFT (Discrete Fourier Transform) length N and the filter length L can both be set to the same value. The filter is in fact a sinusoid with linear increasing frequency between 0 and the nyquist-frequency $f_N$. The filter characteristics are illustrated in figs. 3A-3D. Fig. 3A shows the amplitude-time dependency, fig: 3B the amplitude-frequency dependency, fig. 3C the frequency-time dependency and fig. 3D the relation of the unwrapped phase against the frequency.

Although this filter works quite well, it is not optimal. There are two criteria to be taken into account by the design of the filter: One is that, in general, the lower frequencies in voiced speech (below 1kHz) are already smeared over time, due to glottal pulse shape. Another is that for high frequencies (above 3 kHz) the energy of the voiced speech is relatively low. Also, the band-pass filtering done in many application areas, like in telephone speech between 300 and 3400 Hz, suggest a more efficient use of the available filter length by applying more phase-smearing between 1 and 3 kHz.

Therefore, in a preferred embodiment the following frequency response is used in $P^2CM$ for the generation of the phase-smearing filter:

$$P(k) = \exp[Aj\pi\sin(2\pi kN^{-1})] \text{ with } 0 \leq k \leq \tfrac{1}{2}N. \tag{F}$$

The constant A will be dependent on the desired smearing, particularly on the filter length and thus the used windowing. The characteristics of such a filter are illustrated in figs. 4A-4D. These figures correspond with figs. 3A-3D.

The DFT length may be set to 256. The effective filter length is approximately 96 (12 milliseconds). With this filter length is favorable choice of the constant A is 6.44. The value of 96 comes from the difference between the used input window length (256) and the output window length (160) of the pre-/post-processor. This enables the inclusion of the phase-smearing filter within the processing block 7 and the inverse filter in the processing block 8, as will explained in more detail in the following.

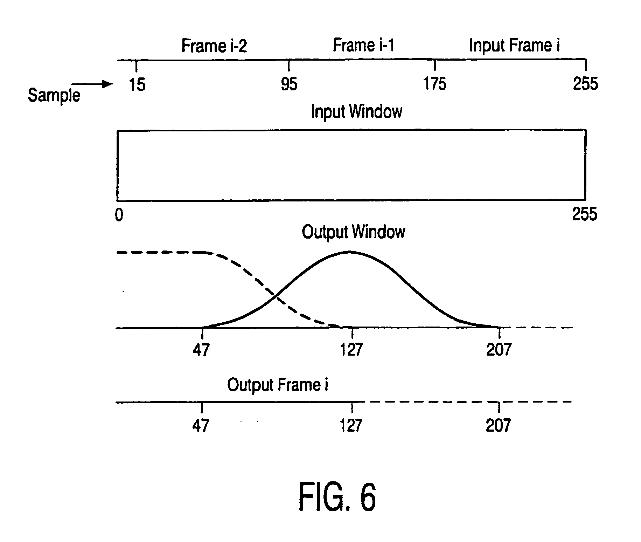

Fig. 5 shows a block diagram of a pre-processor 3. The pre-processor comprises an input window forming unit 19, a FFT unit 20, a phase- smearing filtering and spectral amplitude warping unit 21, an inverse FFT (IFFT) unit 22, an output window forming unit 23 and an overlap-and-add unit 24. In the present example the 80 samples input frames of the input window forming unit 19 are shifted in a buffer of 256 samples to form the input window s(n) (see: fig. 6). The input window type is a rectangle with the same length as the input window, so no extra operation is needed for weighting. The spectrum S(k) is computed using a 256-point FFT 20. After subjecting the signal S(k) to phase-smearing and spectral amplitude warping successively, the obtained signal $S_{fw}(k)$ is transformed in the IFFT 22, thereby obtaining the time-representation $s_{fw}(n)$ of this signal. To allow a smooth transition between two successive frames, overlap-and-add is used with a Hanning output window of 20 ms (160 samples). This output window is centered within the FFT buffer of 256 samples. An extra delay of 32 samples is added to get a multiple of the frame length (160 samples) as the total delay of this process. This alignment delay is only needed for the pre-processor to ensure the synchronous data framing between the pre- and the post-processor. The construction of the post-processor is the same as the pre-processor with only the difference that in a unit corresponding with the unit 21 the effect of spectral amplitude warping is undone and an inverse phase-smearing filter is applied successively. As spectral amplitude warping and unwarping both work in the frequency domain, the phase-smearing and the corresponding inverse processing can also be done in the frequency domain. Although an exact transformation from time domain to frequency domain for the filter operation should imply separate processing blocks, it can be approximated through inclusion within the existing warping/unwarping block. In this way, not only the processing time of the filter reduces, also the extra processing delay can be eliminated. The time-domain filtering operation of formulas (A) and (B) are replaced by the frequency domain filtering operation of formulas (G) for the pre-processor and formulas (H) for the post-processor:

$$R\{S_p(k)\} = R\{S(k)\}.R\{P(k)\} - I\{S(k)\}.I\{P(k)\}$$
$$I\{S_p(k)\} = I\{S(k)\}.R\{P(k)\} + R\{S(k)\}.I\{P(k)\} \qquad\qquad (G)$$

and

$$R\{S_p(k)\} = R\{S(k)\}.R\{P(k)\} + I\{S(k)\}.I\{P(k)\}$$
$$I\{S_p(k)\} = I\{S(k)\}.R\{P(k)\} - R\{S(k)\}.I\{P(k)\} \qquad\qquad (H)$$

with $0 \leq k < \frac{1}{2}N$.

S(k), P(k) and $S_p(k)$ are the Fourier transforms of the corresponding functions s(n), p(n) and $s_p(k)$ respectively in formulas (A) and (B) and R and I the real and imaginary parts of these signals.

It should be clear that this approximation to the separate processing blocks for the filtering has a disadvantage: The spectral amplitude warping operation within the pre-processor is done using amplitude values from unprocessed input windows, whereas the unwarping operation within the post-processor is done using amplitude values from the phase-smeared version of this signal. If the correlation between successive frames is low, this can introduce artifacts. In practice, however, this correlation seems high enough such that the quality degradation due to this approximation remains negligible.

Another simplification is done by dropping the extra delay that is added at the output of the pre-processor. This delay was introduced to synchronize the inputs for the pre-and post-processor. Because of the inserted phase-smearing, this synchronization is not more possible as each frequency component has a different delay.

The embodiment described above is realized by an algorithm which may be in the form of a computer program capable of running on signal processing means in a $P^2CM$ audio encoder and decoder. In so far parts of the figures show units to perform certain programmable functions, these units must be considered as subparts of the computer program.

The invention described is not restricted to the described embodiments. Modifications thereon are possible. Particularly it may be noticed that the frequency response functions and the values mentioned in the described embodiments are only given as an example; other frequency response functions and values are possible.

**Claims**

1.   Speech coding system with a speech encoder and a speech decoder cooperating with said speech encoder, the speech encoder comprising a pre-processor and an ADPCM (adaptive differential pulse code modulation) encoder with a quantizer and step-size adaptation means and the speech decoder comprising an ADPCM decoder with similar step-size adaptation means as in the ADPCM encoder and a post-processor, **characterized in that** the pre-processor is provided with phase-smearing filtering means to smooth the effect of high and/or rapid energy changes at the input of the quantizer and the post-processor is provided with filtering means inverse to said phase-smearing filtering means.

2. Speech coding system according to claim 1, **characterized in that** the pre- and post-processor comprise a time-to-frequency transformation unit to transform frames of time domain samples of audio signals to the frequency domain, processings means to process the samples in the frequency domain and a frequency-to-time transformation unit to transform the latter processed samples to the time-domain, the processing means in the pre-processor being provided with phase-smearing filtering and warping means and the processing means in the post-processor being provided with unwarping means and inverse phase-smearing filtering means.

3. Speech coding system according to claim 2, **characterized in that** the phase-smearing filtering means comprise a filter with a substantially constant amplitude characteristic and a varying phase characteristic both in the frequency domain.

4. Speech coding system according to claim 2 or 3, **characterized in that** in the pre-processor the filtering means and the warping means are coupled one after the other.

5. Speech coding system according to claim 2, 3 or 4, **characterized in that** in the post-processor the unwarping means and the inverse filtering means are coupled one after the other.

6. Speech coding system according to any one of the preceding claims, **characterized in that** the frequency response of the phase-smearing filtering means is in accordance with the relation:

$$P(k) = \exp\left[-j\pi.k(k-\tfrac{1}{2}N)N^{-1}\right] \text{ with } 0 \leq k \leq \tfrac{1}{2}N.$$

7. Speech coding system according to any one of the claims 1-5, **characterized in that** the frequency response of the phase-smearing filtering is in accordance with the relation:
$P(k) = \exp[Aj\pi\sin(2\pi kN^{-1})$ with $0 \leq k \leq \tfrac{1}{2}N$ and A a constant, dependent on the desired smearing.

**Patentansprüche**

1. Sprachcodiersystem mit einem Sprachcodierer und einem Sprachdecodierer, der mit dem genannten Sprachcodierer zusammenarbeitet, wobei der Sprachcodierer einen Vorprozessor und einen ADPCM-Codierer (adaptive Delta-Pulscodemodulation, engl. adaptive differential pulse code modulation, ADPCM) mit einem Quantisierer und Schrittweitenanpassungsmitteln umfasst und wobei der Sprachdecodierer einen ADPCM-Decodierer mit den gleichen Schrittweitenanpassungsmitteln wie in dem ADPCM-Codierer und einen Nachprozessor umfasst, **dadurch gekennzeichnet, dass** der Vorprozessor mit Phasenfaltungsfiltermitteln versehen ist, die die Auswirkung von hohen bzw. schnellen Energieänderungen am Eingang des Quantisierers glätten, und dass der Nachprozessor mit Filtermitteln versehen ist, die den genannten Phasenfaltungsfiltermitteln entgegenwirken.

2. Sprachcodiersystem nach Anspruch 1, **dadurch gekennzeichnet, dass** der Vor- und der Nachprozessor Folgendes umfassen: eine Zeit-Frequenz-Transformationseinheit zum Transformieren von Rahmen von Abtastwerten von Audiosignalen im Zeitbereich in den Frequenzbereich, Verarbeitungsmittel zum Verarbeiten der Abtastwerte im Frequenzbereich und eine Frequenz-Zeit-Transformationseinheit zum Transformieren der letzteren verarbeiteten Abtastwerte in den Zeitbereich, wobei die Verarbeitungsmittel im Vorprozessor mit Phasenfaltungsfilter- und Verzerrungsmitteln und die Verarbeitungsmittel im Nachprozessor mit Entzerrungsmitteln und inversen Phasenfaltungsfiltermitteln versehen sind.

3. Sprachcodiersystem nach Anspruch 2, **dadurch gekennzeichnet, dass** die Phasenfaltungsfiltermittel einen Filter mit einer im Wesentlichen konstanten Amplitudenkennlinie und einer variierenden Phasenkennlinie, beide im Frequenzbereich, umfassen.

4. Sprachcodiersystem nach Anspruch 2 oder 3, **dadurch gekennzeichnet, dass** im Vorprozessor die Filtermittel und die Verzerrungsmittel hintereinander geschaltet sind.

5. Sprachcodiersystem nach Anspruch 2, 3 oder 4, **dadurch gekennzeichnet, dass** im Nachprozessor die Entzerrungsmittel und die inversen Filtermittel hintereinander geschaltet sind.

6. Sprachcodiersystem nach einem der vorhergehenden Ansprüche, **dadurch gekennzeichnet, dass** der Frequenzgang der Phasenfaltungsfiltermittel der folgenden Gleichung entspricht:

$$P(k) = \exp\left[-j\,\pi\,.\,k\,(k - \tfrac{1}{2}\,N)\,N^{-1}\right] \ \text{mit } 0 \le k \le \tfrac{1}{2}\,N.$$

7. Sprachcodiersystem nach einem der Ansprüche 1 - 5, **dadurch gekennzeichnet, dass** der Frequenzgang der Phasenfaltungsfiltermittel der folgenden Gleichung entspricht:
$P(k) = \exp[A\,j\pi\,\sin(2\,\pi\,kN^{-1})]$ mit $0 \le k \le \tfrac{1}{2}\,N$ und A gleich einer Konstanten, die von der gewünschten Faltung abhängt.

## Revendications

1. Système de codage de la parole doté d'un codeur de parole et d'un décodeur de parole coopérant avec ledit codeur de parole, le codeur de parole comprenant un préprocesseur et un codeur ADPCM (Adaptive Delta Pulse Code Modulation) doté d'un quantificateur et de moyens d'adaptation de taille de pas, et le décodeur de parole comprenant un décodeur ADPCM doté de moyens d'adaptation de taille de pas similaires à ceux présents dans le codeur ADPCM, et un postprocesseur, **caractérisé en ce que** le préprocesseur est doté de moyens de filtrage de traînage de phase afin de lisser l'effet lié aux modifications d'énergie élevées et/ou rapides au niveau de l'entrée de quantificateur, et **en ce que** le postprocesseur est doté de moyens de filtrage qui sont l'inverse desdits moyens de filtrage de traînage de phase.

2. Système de codage de la parole suivant la revendication 1, **caractérisé en ce que** le préprocesseur et le postprocesseur comprennent une unité de transformation temporel-fréquentiel afin de transformer des trames d'échantillons de domaine temporel de signaux audio vers le domaine fréquentiel, ainsi que des moyens de traitement destinés à traiter les échantillons dans le domaine fréquentiel, et une unité de transformation fréquentiel-temporel afin de transformer lesdits échantillons traités vers le domaine temporel, les moyens de traitement dans le préprocesseur étant dotés de moyens de filtrage de traînage de phase et de moyens de déformation, et les moyens de traitement dans le postprocesseur étant dotés de moyens d'annulation de déformation et de moyens de filtrage de traînage de phase inverse.

3. Système de codage de la parole suivant la revendication 2, **caractérisé en ce que** les moyens de filtrage de traînage de phase comprennent un filtre présentant une caractéristique d'amplitude pratiquement constante et une caractéristique de phase variable toutes deux dans le domaine fréquentiel.

4. Système de codage de la parole suivant la revendication 2 ou 3, **caractérisé en ce que**, dans le préprocesseur, les moyens de filtrage, et les moyens de déformation sont reliés les uns après les autres.

5. Système de codage de la parole suivant la revendication 2, 3 ou 4, **caractérisé en ce que**, dans le postprocesseur, les moyens d'annulation de déformation, et les moyens de filtrage inverse sont reliés les uns après les autres.

6. Système de codage de la parole suivant l'une quelconque des revendications précédentes, **caractérisé en ce que** la réponse en fréquence des moyens de filtrage de traînage de phase obéit à la relation suivante:

$$P(k) = \exp\left[-j\pi.k(k-\tfrac{1}{2}N)N^{-1}\right] \ \text{avec } 0 \le k \le \tfrac{1}{2}N.$$

7. Système de codage de la parole suivant l'une quelconque des revendications 1 à 5, **caractérisé en ce que** la réponse en fréquence du filtrage de traînage de phase obéit à la relation suivante:

$P(k) = \exp[Aj\pi\sin(2\pi kN^{-1})$ avec $0 \leq k \leq \tfrac{1}{2}N$ et A comme constante, en fonction du traînage souhaité.

FIG. 1

FIG. 2A

FIG. 2B

Ampl.

FIG. 3A

Ampl.

FIG. 3B

f_n

FIG. 3C

∅

f    f_n

FIG. 3D

Ampl.

FIG. 4A

Ampl.

FIG. 4B

f_n

FIG. 4C

∅

f    f_n

FIG. 4D

$S[n]$    $S[k]$    $S_{fw}[k]$    $S_{fw}[n]$

FFT    IFFT

19    20    21    22    23    24

FIG. 5

Sample →

| Frame i-2 | Frame i-1 | Input Frame i |
|-----------|-----------|---------------|
| 15 | 95 | 175 | 255 |

Input Window

0                                                                    255

Output Window

47          127          207

Output Frame i

47          127          207

FIG. 6